# EUROPÄISCHE PATENTSCHRIFT

(11) **EP 1 311 599 B1**
(45) Veröffentlichungstag und Bekanntmachung des Hinweises auf die Patenterteilung: **04.08.2010**
(21) Anmeldenummer: 01960275.4
(22) Anmeldetag: 06.06.2001
(51) Int. Cl.: C08J 11/08

(54) **VERFAHREN ZUR TRENNUNG UND RÜCKGEWINNUNG VON ZIELPOLYMEREN UND DEREN ADDITIVEN AUS EINEM POLYMERHALTIGEN MATERIAL SOWIE DESSEN VERWENDUNG**
METHOD FOR SEPARATING AND RECOVERING TARGET POLYMERS AND THEIR ADDITIVES FROM A MATERIAL CONTAINING POLYMERS AND USE THEREFORE
PROCEDE POUR LA SEPARATION ET LA RECUPERATION DE POLYMERES CIBLES ET DE LEURS ADDITIFS DANS UN MATERIAU CONTENANT DES POLYMERES ET SON UTILISATION

(30) Priorität: 11.08.2000 DE 10039363
(43) Veröffentlichungstag der Anmeldung: 21.05.2003
(73) Patentinhaber: Fraunhofer-Gesellschaft zur Förderung der angewandten Forschung e.V., 80686 München (DE)
(72) Erfinder: MÄURER, Andreas, 85354 Freising (DE); WOLZ, Gerd, 82319 Starnberg (DE); SCHLUMMER, Martin, 85051 Ingolstadt (DE); LUCK, Thomas, 80992 München (DE); KNAUF, Udo, 81929 München (DE); KIPPENHAHN, Rolf, CH-6274 Eschenbach (CH)
(86) Internationale Anmeldenummer: PCT/EP2001/006419
(87) Internationale Veröffentlichungsnummer: WO 2002/014413

(56) Entgegenhaltungen:
- EP-A- 0 949 293
- DE-A- 1 569 262
- DE-A- 2 201 101
- DE-A- 2 607 345
- DE-A- 19 732 673
- US-A- 3 912 664
- US-A- 4 071 479

## Beschreibung

Gegenstand der Erfindung ist ein Verfahren zur Trennung und Rückgewinnung von Zielpolymeren und deren Additiven aus einem polymerhaltigen Material, womit eine Aufbereitung sowohl der Zielpolymere als auch der Additive ermöglicht wird, sowie dessen Verwendung.

Kunststoffe bzw. kunststoffhaltige Materialien finden vielfältige Anwendung für die Herstellung kurzlebiger Wirtschaftsgüter und stellen dabei ein gravierendes Abfallproblem dar. Dies ist darauf zurückzuführen, dass eine Trennung der Polymere und der Additive bislang nur in begrenztem Maße durchgeführt werden kann. In diesem Zusammenhang gewinnen werkstoffliche Recyclingverfahren immer größere Bedeutung, die die Herstellung neuer Rohstoffe aus den wieder aufbereiteten Materialien ermöglichen.

Ein Beispiel hierfür stellt die Aufbereitung bromhaltiger Kunststoffabfälle dar, wobei Bromverbindungen als Flammschutzadditive den Polymeren zugesetzt werden.

Nach aktuellen Schätzungen sind im europäischen Elektronikschrottaufkommen 226.000 t Kunststoff enthalten, von denen durch geeignete Sortierverfahren 105.000 t bromhaltiger Kunststoffabfälle abgetrennt werden können (europäischer Wirtschaftsdienst, November 1999).

Diese Trennung ist derzeit notwendig, da nach aktuellem Stand der Technik bromfreie Kunststoffabfälle einen werkstofflichen Recycling zugänglich sind, bromhaltige dagegen aufgrund möglicher Überschreitungen des Grenzwertes polybromierter Dibenzo-p-dioxine und -furane (PBDD/F) im Rezyklat von der stofflichen Verwertung ausgeschlossen werden.

PBDD/F entstehen bei der thermischen Belastung verschiedener aromatischer bromierter Flammschutzmittel (englisch "flame retardent", FR), z.B. bei der unsachgemäßen Herstellung der FR, dem Compoundieren oder dem erneuten Extrudieren während des Recyclings und sind deshalb sowohl in Altkunststoffen als auch in Kunststoff-Rezyklaten nachweisbar (RIESS et al., BayFORREST-Forschungsvorhaben F116, 1998).

Die verschiedenen bromierten Flammschutz-Additive weisen ein sehr unterschiedliches PBDD/F-Bildungspotential auf. Die Ausrüstung mit Tetrabrombisphenol A (TBBP A), in dem der Brückensauerstoff zwischen dem aromatischen Ring durch eine sperrige Alkylgruppe ersetzt wurde, führt nur zu einer geringen Bildung an PBDD/F. Die Verkehrsfähigkeit dieses dem Stand der Technik entsprechenden Flammschutzmittels sowie der auf diese Weise flammgeschützten Neupolymere und Kunststoff-Rezyklate ist im Allgemeinen nicht beeinträchtigt. Nach heutigem Wissen besteht dagegen die Gefahr einer quantitativ relevanten PBDD/F-Bildung bei Verwendung von den PBDD/F strukturähnlichen Flammschutzmittel wie z.B. polybromierte Diphenylether (PBDE), polybromierte Biphenyle (PBB), bis-[Dibromopropoxy-dibromphenyl]-propan (OBPE) oder bis-(Tribrom-phenoxy)-ethan (TBPE).

Aufgrund des großen Anteils der oben genannten polybromierten Flammschutzmittel mit großem Dioxin-Bildungspotential wird derzeit der stofflichen Verwertung der mit Brom flammengeschützten Altkunststoffe eine geringe Erfolgschance beigemessen und diese Kunststoff-Fraktion in der Praxis deponiert oder thermisch behandelt.

Zur Lösung dieses Entsorgungsproblems wurde deshalb der Versuch unternommen, Brom vor der erneuten Extrusion mittels überkritischen CO₂ zu extrahieren (Marioth et al. 1996) oder durch Reduktion der bromierten Verbindungen zu entfernen (von Quast, 1998). Diese Ansätze waren zwar im Labor erfolgreich, erwiesen sich aber als nicht rentabel bzw. hatten zudem den Nachteil, dass das Rezyklat im Vergleich zum Altkunststoff seine flammhemmende Ausrüstung verlor, so dass beide Verfahrensansätze bislang nicht in einen größeren Maßstab übertragen worden sind.

Allerdings bergen mit bromierten Flammschutzmittel ausgerüstete Altkunststoffe das Potential für die Rückgewinnung des enthaltenen Broms. Laut einer Mitteilung des European Brominated Flam Retardent Industrie Panel (EBFRIP) entspricht die aus Elektro- und Elektronikschrott potentiell verfügbare Menge an Brom etwa 10.000 t. Die Möglichkeit der Rückschleusung dieser Brommenge in den industriellen Bromkreislauf erscheint damit sowohl im Hinblick auf die Ressourcenschonung als auch aus wirtschaftlicher Sicht, vielversprechend.

In der DE 197 32 673 A1 wird ein Recycling-Verfahren zur selektiven Extraktion an verschiedenen technischen Kunststoffen beschrieben. Mit diesem Verfahren werden einzelne Kunststoff-Fraktionen selektiv aus inhomogenen Altkunststoffgemischen extrahiert, der Polymerextrakt gereinigt, die Störsubstanzen reduziert und das Polymer schließlich ausgefällt.

Ein weiteres Beispiel für die Wiederaufbereitung von kunststoffhaltigen Materialien ist das Recycling von Polyvinylbutyral (PVB)-Abfällen aus Kfz-Windschutzscheiben. Verbundglasscheiben, die vorwiegend aus dem Automobilbau stammen, werden schon seit vielen Jahren von Glas-Verwertern recycelt. Diese Scheiben besitzen als Splitterschutz eine Kunststoff-Mittelschicht aus hochwertiger Weich-PVB-Folie. Die beim Glasrecycling als Reststoff anfallenden PVB-Folien sind mit abrasivem Glas, Holz, Latex, Silicon und anhaftenden Metallen aus der Fensterglas-Aufbereitung verschmutzt. Sie werden daher deponiert oder im geringen Umfang der thermischen Nutzung im Zementwerk zugeführt, wobei die erzielbaren Erlöse die Kosten der erforderlichen Vorbehandlung (Glasabtrennung) nicht decken.

Eine werkstoffliche Verwertung von ungereinigtem PVB in Lacken und Bitumen (EP 0 582 219 B1) scheint theoretisch möglich, wird technisch aber nicht betrieben. Die Entfernung der unterschiedlichen PVB-Weichmacher, die neben der verbesserten Transport- und Lagerfähigkeit auch die Basis für Produkte mit definierten Eigenschaften darstellt, ist unbedingt erforderlich. Jedoch hat der industrielle Arbeitskreis der PVB-Folienhersteller und Rohstofflieferanten Anfang der 90er-Jahre die Weichmacher-Abtrennung aus ökonomischen Gründen verworfen. Das in der DE 197 32 673 A1 beschriebene Verfahren bietet die Möglichkeit, durch optimierte Reinigung und Fällung aus vermischten, verschmutzten und in Verbundbauweise vorliegenden Kunststoffabfällen hochwertige, weichmacherarme Rezyclate zum Einsatz in der ursprünglichen Anwendung zu gewinnen.

Allerdings weist dieses Verfahren die Nachteile auf, dass weder die Additive zurückgewonnen werden können noch die Effizienz der Reinigung des Polymers hoch genug ist, so dass ein ökonomischer Anreiz zur gewerblichen Anwendung bei der Aufbereitung von kunststoffhaltigen Abfällen in dieser Form nicht gegeben ist. Eine höhere Reinigungseffizienz dieses Verfahrens ließe sich lediglich durch zusätzliche Reinigungsschritte der Polymerlösung realisieren, was aber wiederum einen erheblichen Energie- und Kostenfaktor darstellt.

In der Offenlegungsschrift DE 2 201 101 ist ein mehrstufiges Verfahren zur Gewinnung eines wiederverwertbaren Vinylchloridpolymergemisches aus Kunststoffabfällen beschrieben. Hier werden die Vinylchloridpolymere aus den Kunststoffabfällen zunächst in einem Lösungsmittel gelöst. Anschließend wird die erhaltene flüssige Phase mit einem Nichtlösungsmittel für das Vinylchloridpolymer zur Ausfällung desselben versetzt. Als Nichtlösungsmittel werden Wasser oder niedere Alkohole genannt. Es wird auch darauf verwiesen, dass Azeotrope von Methanol oder Wasser mit Methylisobutylketon oder Methylethylketon verwendet werden können.

Aufgabe der vorliegenden Erfindung ist es daher, ein Verfahren bereitzustellen, mit dem eine Trennung des Zielpolymers und der Additive aus einem polymerhaltigen Material ermöglicht wird. Dabei ist es ein Ziel, sowohl das Zielpolymer als auch die Additive in einer Weise aufzuarbeiten, dass ein Wiedereinsatz dieser Komponenten ermöglicht wird. Die hierfür notwendigen hohen Ansprüche an die Effizienz der Reinigung der Komponenten soll durch ein Verfahren gewährleistet werden, das basierend auf dem Prinzip einer selektiven Fällung sowohl das Polymer als auch die Additive in hoher Reinheit isoliert.

Die Erfindung wird durch die kennzeichnenden Merkmale des Patentanspruchs 1 gelöst. Die Verwendung des Verfahrens wird im Anspruch 23 angegeben. Die Unteransprüche stellen bevorzugte Ausgestaltungen und Weiterbildungen dar.

Das Verfahren zur Trennung und Rückgewinnung von Zielpolymeren und deren Additiven beruht darauf, dass das Zielpolymer zusammen mit den Additiven zunächst in einem Lösungsmittel I ausgewählt aus der Gruppe bestehend aus niedermolekularen Alkoholen (C₁-C₅), cyclischen Ethern, aliphatischen und cyclischen Ketonen, basischen Estergemischen oder einer Mischung aus diesen gelöst wird. Das gelöste Zielpolymer mit den Additiven wird mit einem Lösungsmittelsystem aus Wasser und einem mit Wasser ein 2-Phasensystem bildendes Lösungsmittel III ausgewählt aus der Gruppe bestehend aus aliphatischen oder aromatischen Kohlenwasserstoffen versetzt, wobei das Zielpolymer in der durch das Lösungsmittel III gebildeten Phase ausgefällt wird, während die Additive in gelöster Form verbleiben. Das ausgefällte Zielpolymer wird anschließend ebenso wie die Additive aus der Lösung abgetrennt.

Als Variante erfolgt die Trennung eines Zielpolymers aus einem Polymergemisch, in dem weitere Fremdpolymere enthalten sind, wobei mindestens ein Fremdpolymer im Lösungsmittel I mitgelöst wird und bei der Ausfällung des Zielpolymers die gelösten Fremdpolymere nicht mitgefällt werden.

Die Art der Eintragung erfolgt nun so, dass das in Lösungsmittel I gelöste Zielpolymer zusammen mit den Additiven in das Lösungsmittelsystem aus Wasser und einem Lösungsmittel III eingetragen wird. Die Eintragung des gelösten Zielpolymers erfolgt dabei vorteilhafterweise mit Hilfe einer Düse, die knapp unter dem Flüssigkeitsspiegel eingetaucht wird.

In einer vorteilhaften Weiterbildung kann das Lösungsmittelsystem aus Wasser und einem Lösungsmittel III auch in das Lösungsmittel I, in dem Zielpolymer und Additive gelöst vorliegen, eingetragen werden.

Bei der Variante des Lösungsmittelsystems aus Wasser und einem mit Wasser nicht mischbaren Lösungsmittel III besteht zusätzlich die Möglichkeit, das in Lösungsmittel I gelöste Zielpolymer mit dem Lösungsmittel III zu vermischen und anschließend durch Zugabe von Wasser die Ausbildung zweier Phasen zu realisieren.

Das Verfahren bietet sich in bevorzugter Weise für die Zielpolymere Polyvinylchloride (PVC), Polycarbonate (PC), Polystyrole und deren Copolymere, z.B. Polyacrylnitrilbutadienstyrol (ABS), Polyacrylate, Polymethacrylate, Polyethylenterephthalate (PET) und Polyvinylbutyrale (PVB) an.

Als Additive können bevorzugt polybromierte Diphenylether (PBDE), polybromierte Biphenyle (PBB), bis-[Dibromopropoxy-dibromphenyl]-propan (OBPE) oder bis-(Tribrom-phenoxy)-ethan (TBPE) abgetrennt und aufbereitet werden. Ebenso wird die Abtrennung von Weichmachern, wie z.B. Ester der Phthalsäure oder Adipinsäure, aliphatische Carbonsäuren (C₄-C₈) oder Polyethylenglykol, aus Kunststoffen ermöglicht.

Für die Lösung der Polymere bieten sich als Lösungsmittel I vorteilhafterweise Tetrahydrofuran (THF), Aceton, Methylethylketon, Cyclohexanon oder Mischungen aus diesen Lösungsmitteln an. Für das Lösungsmittel III kann ein unpolarer aliphatischer oder aromatischer Kohlenwasserstoff wie n-Hexan oder Toluol eingesetzt werden.

Vor dem Verfahrensschritt b) kann eine Abtrennung von in Lösungsmittel I nicht löslichen Bestandteilen erfolgen. Hierzu zählen vor allem im Kunststoff oder dem kunststoffhaltigen Material vorliegende Fremdpolymere oder Abbauprodukte. Dieser Schritt erfolgt bevorzugt mit physikalischen Trennungsmethoden, wie z.B. einer Filtration über ein Metallgewebefilter.

Die Abtrennung des gefällten Zielpolymers aus der Lösung erfolgt nach physikalischen Trennungsprinzipien. So kann das ausgefällte Zielpolymer aus der Lösung in einer Zentrifuge abdekantiert oder filtriert werden.

Nach der Abtrennung des ausgefällten Zielpolymers erfolgt dessen Trocknung, wobei diese bevorzugt bei Temperaturen über 50 °C durchgeführt wird. Das getrocknete Zielpolymer kann anschließend mit den aus dem Stand der Technik Extrudern erneut extrudiert werden.

Für die Abtrennung und Rückgewinnung der Additive wird vorteilhafterweise die die Additive enthaltende Lösung destilliert. Ebenso können auch Membrantrennverfahren oder chromatographische Trennungsverfahren, wie sie aus der Ionen, Verteilungs- und Adsorptionschromatographie bekannt sind, eingesetzt werden.

Wird das Verfahren für die Abtrennung und Rückgewinnung von halogenhaltigen Flammschutzmitteln eingesetzt, wird in bevorzugter Weise die Rückgewinnung der Halogene durch eine Reduktion des Flammschutzmittels erreicht.

Das Verfahren zur Trennung und/oder Rückgewinnung von Zielpolymeren von deren Additiven aus polymerhaltigen Materialien findet hauptsächlich Verwendung bei der Wiederaufbereitung von halogenhaltigen Kunststoffen und kunststoffhaltigen Materialien.

Auch die Wiederaufbereitung Weichmacher enthaltender Kunststoffe oder kunstoffhaltiger Materialien stellt ein bevorzugtes Anwendungsfeld dar. Hierzu zählt als bevorzugtes Beispiel die Aufbereitung von Polyvinylbutyral(PVB)-Abfällen, die mit diesem Verfahren von den Weichmacher-Additiven abgetrennt werden können. Diese Kunststoffe finden vor allem bei der Produktion von Verbundglasscheiben für den Automobilbau Anwendung.

Erfindungsgemäß kann das Verfahren auch zur Wiederaufbereitung von Polyvinylbutylral enthaltenden Kunstoffen oder kunststoffhaltigen Materialien zur anschließenden Herstellung von Glas-Splitterschutz-Materialien für Flachglas, als Implosions- und Explosionsschutzmaterialien für Laborglas, schalldämmende Verbundbleche oder Polymerbeschichtungen für gesinterte poröse Glasplatten und Formen verwendet werden.

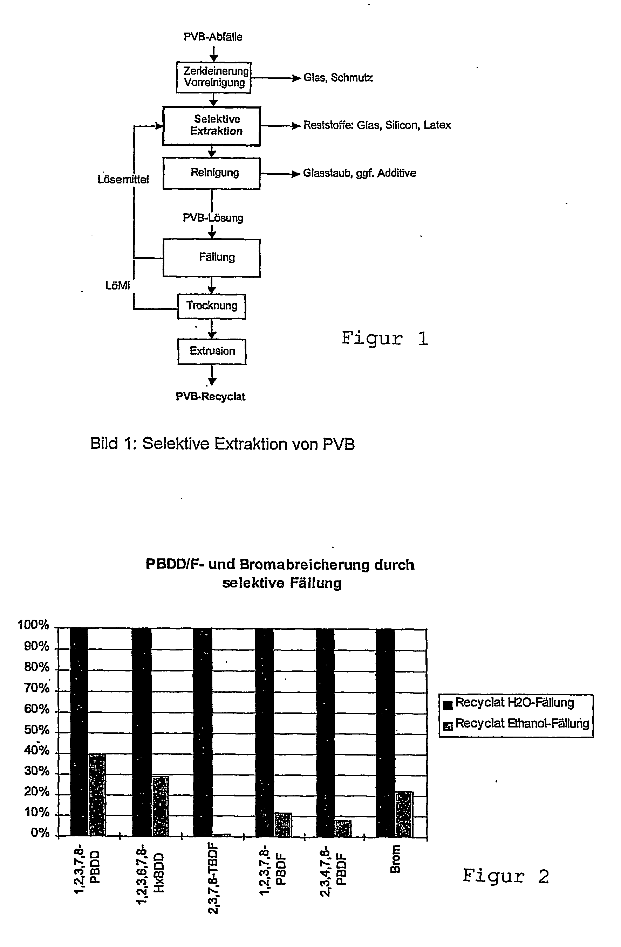

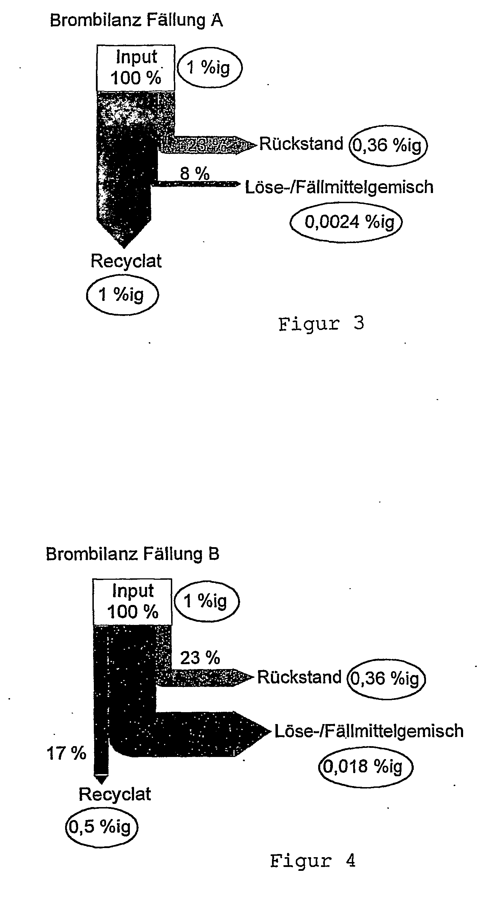

Weitere Vorteile und Ausgestaltungen werden in der Figur 1 und den nachfolgenden Ausführungsbeispielen dargestellt.

Fig. 1 stellt das erfindungsgemäße Schema des Verfahrensablaufs für die Wiederaufbereitung von Polyvinylbutyral(PVB)-Abfall dar. Hier werden sämtliche Verfahrensschritte, vom unbehandelten Kunststoff-Abfall bis zum aufgereinigten Kunststoff-Rezyklat aufgezeigt.

### Beispiel 1

### Fällung der ethanolischen PVB-Lösung in ein 2-Phasensystem n-Hexan/Wasser

Dieser Versuch wurde sowohl im kleinen Maßstab im Labor durchgeführt als auch mit einer größeren Menge. Die in Isopropanol (ca. 40 °C) aufgelösten PVB-Proben (ungewaschene PVB-Abfälle direkt von der Halde) wurden unter ständigem, langsamen Rühren in ein mit Wasser/n-Hexan gefülltes Becherglas eingegossen. Es wurde darauf geachtet, dass sich die n-Hexan-Phase nicht mit der Wasserphase durchmischt und dass die Polymerlösung möglichst lange in der n-Hexan-Phase verweilt. Bei dem großen Ansatz wurden ca. 450 g PVB-Abfall aus der Tonne entnommen und in ca. 10 Liter Butanol/Ethanol/iso-Propanol in der Wärme und unter ständigem Rühren gelöst. Anschließend wird die Polymerlösung zuerst über ein 500 Liter/min-Filter und nachfolgend über ein 150 Liter/min-Filter filtriert. Aufgrund der großen Anteile an Verschmutzungen bildet sich ein gelartiger, verschmutzter Bodensatz. Die gefilterten ca. 7,5 Liter Polymerlösung (braun gefärbt und optisch trüb) gelangen zur Fällung. Die Fällung von jeweils 1 Liter Polymerlösung in 2 Liter n-Hexan erfolgt oberhalb der unteren Phase (6 Liter Wasser). Nach jeder Fällung werden das Wasser und das n-Hexan erneuert. Der PVB-Niederschlag wird bei 90 °C getrocknet und anschließend in einer mit Stickstoff gekühlten Mühle gemahlen.

Bei dieser Variante wird eine gute Weichmacherabtrennung (vergleichbar mit einer 8-stündigen Soxhletextraktion) erreicht.

### Beispiel 2

### Mischung der PVB-Lösung mit Hexan und anschließender Fällungsversuch des PVB's mit Wasser

Zur Flüssig-Flüssig-Extraktion von Weichmachern mittels Hexan aus der ethanolischen PVB-Lösung werden langsam unter Rühren 10% n-Hexan zugefügt. Die Fällung des PVB und anschließende Phasentrennung (Verdrängung des n-Hexans und der Weichmacher aus der homogenen Lösung) soll durch Zugabe von 10% Wasser erfolgen. Als Ergebnis wird nach Wasserzugabe und Durchmischung eine stabile Emulsion erhalten. Die unvollständige Phasentrennung erfolgt sehr langsam über mehrere Stunden: Oben bildet sich eine gelartige Emulsions-Phase, unten eine klarere PVB-Lösung.

Mit Ethanol-Lösungen, die 10% Wasser enthalten, werden dagegen bei unverändert guten Löseeigenschaften nach Zugabe von n-Hexan und starker Durchmischung instabile Emulsionen erreicht, die sich innerhalb von 10 Minuten in zwei Phasen trennen.

Die oben beobachtete kinetische gehemmte Phasentrennung einer n-Hexan-Ethanol-Wasser-PVB-Lösung kann auf diese Weise realisiert werden. Die Reinigungswirkung einer Flüssig-Flüssig-Extraktion mit n-Hexan ist besonders erfolgversprechend, die Weichmacher-Reduktion entspricht mindestens der 8-stündigen Soxhlet-Extraktion.

## Patentansprüche

1. Verfahren zur Trennung und Rückgewinnung von Zielpolymeren und deren Additiven aus einem polymerhaltigen Material,
**dadurch gekennzeichnet, dass**
a) das Zielpolymer zusammen mit mindestens einem Additiv in einem Lösungsmittel I ausgewählt aus der Gruppe bestehend aus niedermolekularen Alkoholen (C₁-C₅), cyclischen Ethern, aliphatischen und cyclischen Ketonen, basischen Estergemischen oder einer Mischung aus diesen gelöst wird,
b) das gelöste Zielpolymer mit den Additiven mit einem Lösungsmittelsystem aus Wasser und einem mit Wasser ein 2-Phasensystem bildendes Lösungsmittel III ausgewählt aus der Gruppe bestehend aus aliphatischen oder aromatischen Kohlenwasserstoffen versetzt wird, wobei das Zielpolymer in der durch das Lösungsmittel III gebildeten Phase ausgefällt wird, während die Additive in gelöster Form verbleiben und
c) das ausgefällte Zielpolymer und
d) mindestens ein in flüssiger Phase vorliegendes Additiv abgetrennt werden.

2. Verfahren nach Anspruch 1, **dadurch gekennzeichnet, dass** das polymerhaltige Material ein Polymergemisch enthält, wobei in Schritt a) neben dem Zielpolymer mindestens ein weiteres Fremdpolymer gelöst wird und in Schritt b) die Fremdpolymere in gelöster Form verbleiben.

3. Verfahren nach einem der vorhergehenden Ansprüche, **dadurch gekennzeichnet, dass** das in Lösungsmittel I gelöste Zielpolymer zusammen mit den gelösten Additiven in das Lösungsmittelsystem aus Wasser und einem Lösungsmittel III eingetragen wird.

4. Verfahren nach einem der vorhergehenden Ansprüche, **dadurch gekennzeichnet, dass** das Lösungsmittelsystem aus Wasser und einem Lösungsmittel III zu dem in Lösungsmittel I gelösten Zielpolymer zugegeben wird.

5. Verfahren nach einem der vorhergehenden Ansprüche, **dadurch gekennzeichnet, dass** das in Lösungmittel I gelöste Zielpolymer zunächst mit dem Lösungsmittel III gemischt wird und anschließend Wasser zugesetzt wird.

6. Verfahren nach einem der vorhergehenden Ansprüche, **dadurch gekennzeichnet, dass** das in Lösungsmittel I gelöste Zielpolymer im Schritt b) mit einer Düse eingetragen wird.

7. Verfahren nach einem der vorhergehenden Ansprüche, **dadurch gekennzeichnet, dass** als Zielpolymer ein Polymer aus der Gruppe der Polyvinylchloride, Polycarbonate, Polystyrole und deren Copolymere (z.B. Polyacrylnitrilbutadienstyrol), Polyacrylate, Polymethacrylate, Polyethylenterephthalate und Polyvinylbutyrale abgetrennt wird.

8. Verfahren nach einem der vorhergehenden Ansprüche, **dadurch gekennzeichnet, dass** als Additive halogenhaltige Flammschutzmittel, wie z.B. polybromierte Diphenylether (PBDE), polybromierte Biphenyle (PBB), bis-[Dibromopropoxy-dibromphenyl]-propan (OBPE) oder bis-(Tribromphenoxy)-ethan (TBPE) abgetrennt und aufbereitet werden.

9. Verfahren nach einem der vorhergehenden Ansprüche, **dadurch gekennzeichnet, dass** als Additive Weichmacher, wie z.B. Ester der Phthalsäure oder Adipinsäure und/oder aliphatische Carbonsäuren (C₄-C₈) mit Polyethylenglykol abgetrennt und aufbereitet werden.

10. Verfahren nach einem der vorhergehenden Ansprüche, **dadurch gekennzeichnet, dass** das Lösungsmittel I ausgewählt ist aus der Gruppe bestehend aus Tetrahydrofuran, Aceton, Methylethylketon, Cyclohexanon oder einer Mischung aus diesen.

11. Verfahren nach einem der vorhergehenden Ansprüche, **dadurch gekennzeichnet, dass** das Lösungsmittel III n-Hexan oder Toluol ist.

12. Verfahren nach einem der vorhergehenden Ansprüche, **dadurch gekennzeichnet, dass** vor dem Schritt b) das in Lösungsmittel I gelöste Zielpolymer von den im Lösungsmittel I nicht löslichen Bestandteilen durch physikalische Trennmethoden abgetrennt wird.

13. Verfahren nach Anspruch 12, **dadurch gekennzeichnet, dass** als physikalische Trennmethode eine Filtration durchgeführt wird.

14. Verfahren nach einem der vorhergehenden Ansprüche, **dadurch gekennzeichnet, dass** das gefällte Zielpolymer (Schritt c) durch eine physikalische Trennmethode isoliert wird.

15. Verfahren nach Anspruch 14, **dadurch gekennzeichnet, dass** das gefällte Zielpolymer abdekantiert und/oder abfiltriert wird.

16. Verfahren nach einem der vorhergehenden Ansprüche, **dadurch gekennzeichnet, dass** das Zielpolymer nach der Abtrennung getrocknet wird.

17. Verfahren nach Anspruch 16, **dadurch gekennzeichnet, dass** die Trocknung bei einer Temperatur von mehr als 50 °C durchgeführt wird.

18. Verfahren nach einem der vorhergehenden Ansprüche, **dadurch gekennzeichnet, dass** das abgetrennte und getrocknete Zielpolymer reextrudiert wird.

19. Verfahren nach einem der vorhergehenden Ansprüche, **dadurch gekennzeichnet, dass** in Schritt d) die Additive durch Destillation der Lösung wiedergewonnen werden.

20. Verfahren nach einem der Ansprüche 1 bis 18, **dadurch gekennzeichnet, dass** in Schritt d) die in Lösung vorliegenden Additive durch chromatographische Trennungsverfahren, wie z.B. Ionen-, Verteilungs- oder Adsorptionschromatographie, zurückgewonnen werden.

21. Verfahren nach einem der Ansprüche 1 bis 18, **dadurch gekennzeichnet, dass** in Schritt d) die in Lösung vorliegenden Additive durch Membrantrennverfahren wiedergewonnen werden.

22. Verfahren nach einem der vorhergehenden Ansprüche, **dadurch gekennzeichnet, dass** in Schritt d) aus den in Lösung vorliegenden halogenhaltigen Additiven die Halogene durch Reduktion der Flammschutzmittel zurückgewonnen werden.

23. Verwendung des Verfahrens nach einem der Ansprüche 1 bis 22 für die Wiederaufbereitung halogenhaltiger Kunststoffe und/oder kunststoffhaltiger Materialien.

24. Verwendung des Verfahrens nach einem der Ansprüche 1 bis 22 für die Wiederaufbereitung Weichmacher enthaltender Kunststoffe und/oder kunststoffhaltiger Materialien.

25. Verwendung des Verfahrens nach einem der Ansprüche 1 bis 22 zur Wiederaufbereitung von Polyvinylbutylral enthaltenden Kunstoffen oder kunststoffhaltigen Materialien zur anschließenden Herstellung von Glas-Splitterschutz-Materialien für Flachglas, als Implosions- und Explosionsschutzmaterialien für Laborglas, schalldämmende Verbundbleche oder Polymerbeschichtungen für gesinterte poröse Glasplatten und Formen.

## Claims

1. Method for separating and recovering target polymers and additives thereof from a polymer-containing material,
**characterised in that**
a) the target polymer, together with the additives, is firstly dissolved in a solvent I selected from the group comprising low-molecular alcohols (C₁-C₅), cyclic ethers, aliphatic and cyclic ketones, basic ester mixtures or a mixture of these,
b) the dissolved target polymer with the additives is mixed with a solvent system comprising water and a solvent III forming with water a 2-phase system, selected from the group comprising aliphatic or aromatic hydrocarbons, the target polymer being precipitated in the phase formed by the solvent III, whilst the additives remain in dissolved form and
c) the precipitated target polymer and
d) at least one additive present in liquid phase is separated.

2. Method according to claim 1, **characterised in that** the polymer-containing material contains a polymer mixture, at least one further foreign polymer being dissolved, in step a), in addition to the target polymer and the foreign polymers remaining in dissolved form in step b).

3. Method according to one of the preceding claims, **characterised in that** the target polymer dissolved in solvent I, together with the dissolved additives, is introduced into the solvent system comprising water and a solvent III.

4. Method according to one of the preceding claims, **characterised in that** the solvent system comprising water and a solvent III is added to the target polymer dissolved in solvent I.

5. Method according to one of the preceding claims, **characterised in that** the target polymer dissolved in solvent I is mixed firstly with the solvent III and subsequently water is added.

6. Method according to one of the preceding claims, **characterised in that** the target polymer dissolved in solvent I is introduced, in step b), with a nozzle.

7. Method according to one of the preceding claims, **characterised in that**, as target polymer, a polymer from the group of the polyvinyl chlorides, polycarbonates, polystyrenes and copolymers thereof, (e.g. polyacrylonitrile-butadiene-styrene), polyacrylates, polymethacrylates, polyethylene terephtalates and polyvinylbutyrals is separated.

8. Method according to one of the preceding claims, **characterised in that**, as additives, halogen-containing flameproofing agents, such as e.g. polybrominated diphenyl-ether (PBDE), polybrominated biphenyls (PBB), bis-[dibromopropoxy-dibromophenyl]-propane (OBPE) or bis-(tribromophenoxy)-ethane (TBPE), are separated and processed.

9. Method according to one of the preceding claims, **characterised in that**, as additives, plasticisers, such e.g. esters of phthalic acid or adipinic acid and/or aliphatic carboxylic acids (C₄-C₈) with polyethylene glycol, are separated and processed.

10. Method according to one of the preceding claims, **characterised in that** the solvent I is selected from the group comprising tetrahydrofuran, acetone, methyl ethyl ketone, cyclohexanone or a mixture of these.

11. Method according to one of the preceding claims, **characterised in that** the solvent III is n-hexane or toluene.

12. Method according to one of the preceding claims, **characterised in that**, before step b), the target polymer dissolved in solvent I is separated from the components non-soluble in solvent I by physical separation methods.

13. Method according to claim 12, **characterised in that** a filtration is implemented as physical separation method.

14. Method according to one of the preceding claims, **characterised in that** the precipitated target polymer (step c) is isolated by a physical separation method.

15. Method according to claim 14, **characterised in that** the precipitated target polymer is decanted and/or filtered.

16. Method according to one of the preceding claims, **characterised in that** the target polymer is dried after separation.

17. Method according to claim 16, **characterised in that** drying is implemented at a temperature of more than 50°C.

18. Method according to one of the preceding claims, **characterised in that** the separated and dried target polymer is re-extruded.

19. Method according to one of the preceding claims, **characterised in that**, in step d), the additives are recovered by distillation of the solution.

20. Method according to one of the claims 1 to 18, **characterised in that**, in step d), the additives present in solution are recovered by chromatographic separation methods, such as e.g ion-, distribution- or adsorption chromatography.

21. Method according to one of the claims 1 to 18, **characterised in that**, in step d), the additives present in solution are recovered by membrane separation methods.

22. Method according to one of the preceding claims, **characterised in that**, in step d), the halogens are recovered from the halogen-containing additives present in solution by reduction of the flameproofing agents.

23. Use of the method according to one of the claims 1 to 22, for the reprocessing of halogen-containing plastic materials and/or plastic-containing materials.

24. Use of the method according to one of the claims 1 to 22 for the reprocessing of softener-containing plastic materials and/or plastic-containing materials.

25. Use of the method according to one of the claims 1 to 22 for reprocessing of polyvinylbutyral-containing plastic materials or plastic-containing materials for subsequent production of glass shatter-proof materials for flat glass, as implosion- and explosion-proof materials for laboratory glass, sound-insulating composite metal sheets or polymer coatings for sintered porous glass sheets and moulds.

## Revendications

1. Procédé pour la séparation et la récupération de polymères cibles et de leurs additifs à partir d'un matériau renfermant des polymères,
**caractérisé en ce que**
a) on dissout le polymère cible ainsi qu'au moins un additif dans un solvant I choisi dans le groupe formé par les alcools inférieurs (C₁-C₅), les éthers cycliques, les cétones aliphatique et cycliques, les mélanges d'esters basiques et leurs mélanges,
b) on mélange le polymère cible ainsi que les additifs dissous avec un système de solvant à base d'eau et d'un solvant III formant avec l'eau un système biphasé, choisi dans le groupe formé par les hydrocarbures aliphatiques ou aromatiques, le polymère crible précipitant dans la phase formée par le solvant III tandis que les additifs restent sous forme dissoute, et
c) on sépare le polymère cible précipité, et
d) au moins un additif présent en phase liquide.

2. Procédé conforme à la revendication 1,
**caractérisé en ce que**
le matériau renfermant des polymères contient un mélange de polymère, dans l'étape a), en plus du polymère cible au moins un autre polymère étranger étant dissout, et dans l'étape b), les polymères étrangers restant sous forme dissoute.

3. Procédé conforme à l'une des revendications précédentes,
**caractérisé en ce que**
le polymère cible dissout dans le solvant I ainsi que les additifs dissout sont introduits dans le système de solvant à base d'eau et d'un solvant III.

4. Procédé conforme à l'une des revendications précédentes,
**caractérisé en ce que**
le système de solvant à base d'eau et d'un solvant III est ajouté au polymère cible dissout dans le solvant I.

5. Procédé conforme à l'une des revendications précédentes,
**caractérisé en ce que**
le polymère cible dissout dans le solvant I est tout d'abord mélangé avec le solvant III avant que l'eau soit ajoutée.

6. Procédé conforme à l'une des revendications précédentes,
**caractérisé en ce que**
le polymère cible dissout dans le solvant I est introduit dans l'étape b) avec une buse.

7. Procédé conforme à l'une des revendications précédentes,
**caractérisé en ce que**
en tant que polymère cible on sépare un polymère du groupe formé par le chlorure de polyvinyle, le polycarbonate, le polystyrène et ses co-polymères (par exemple le poly-acrylonitrile butadiene styrène), le polyacrylate, le poly-méthacraylate, le polyéthylène terephthalate et le polyvinyl butyrale.

8. Procédé conforme à l'une des revendications précédentes,
**caractérisé en ce que**
en tant qu'additifs on sépare et traite des agents de protection contre la flamme renfermant des halogènes tels que par exemple le diphényl éther polybromé (PBDE) le biphényle polybromé (PDB), le bis -[dibromopropoxy dibromophényl] propane (OBPE) ou le bis -(tribromophénoxy) éthane (TBPE).

9. Procédé conforme à l'une des revendications précédentes,
**caractérisé en ce que**
en tant qu'additif on sépare et traite des plastifiants tels que par exemple des esters de l'acide phthalique ou de l'acide adipique et/ou d'acides carboxyliques aliphatiques (C₄-C₈) avec le polyéthylène glycol.

10. Procédé conforme à l'une des revendications précédentes,
**caractérisé en ce que**
le solvant I est choisi dans le groupe formé par le tétrahydrofurane, l'acétone, la méthyl éthyl cétone, la cyclohexanone ou un mélange de ces composés.

11. Procédé conforme à l'une des revendications précédentes,
**caractérisé en ce que**
le solvant III est le n-hexane ou le toluène.

12. Procédé conforme à l'une des revendications précédentes,
**caractérisé en ce que**
avant l'étape b) on sépare le polymère cible dissout dans le solvant I des constituants non solubles dans le solvant I par des méthodes de séparation physique.

13. Procédé conforme à la revendication 12,
**caractérisé en ce que**
en tant que méthode de séparation physique on met en oeuvre une filtration.

14. Procédé conforme à l'une des revendications précédentes,
**caractérisé en ce que**
on isole le polymère cible précipité (étape c) par une méthode de séparation physique.

15. Procédé conforme à la revendication 14,
**caractérisé en ce que**
on sépare le polymère cible précipité par décantation et/ou par filtration.

16. Procédé conforme à l'une des revendications précédentes,
**caractérisé en ce que**
on sèche le polymère cible après la séparation.

17. Procédé conforme à la revendication 16,
**caractérisé en ce que**
l'on met en oeuvre le séchage à une température supérieure à 50°C.

18. Procédé conforme à l'une des revendications précédentes,
**caractérisé en ce que**
l'on ré extrude le polymère cible séparé et séché.

19. Procédé conforme à l'une des revendications précédentes,
**caractérisé en ce que**
dans l'étape d) on récupère les additifs par distillation de la solution.

20. Procédé conforme à l'une des revendications 1 à 18,
**caractérisé en ce que**
dans l'étape d) on récupère les additifs présents en solution par un procédé de séparation chromatographique tel que par exemple la chromatographie ionique, la chromatographie de partage ou la chromatographie d'adsorption.

21. Procédé conforme à l'une des revendications 1 à 18,
**caractérisé en ce que**
dans l'étape d) on récupère les additifs présents en solution par un procédé de séparation par membrane.

22. Procédé conforme à l'une des revendications précédentes,
**caractérisé en ce que**
dans l'étape d) on récupère les halogènes à partir des additifs renfermant des halogènes présents en solution par réduction de l'agent de protection contre les flammes.

23. Utilisation du procédé conforme à l'une des revendications 1 à 22, pour le retraitement de matières plastiques et/ou de matériaux à base de matières plastiques renfermant des halogènes.

24. Utilisation du procédé conforme à l'une des revendications 1 à 22, pour le retraitement de matières plastiques et/ou de matériaux à base de matières plastiques renfermant des plastifiants.

25. Utilisation du procédé conforme à l'une des revendications 1 à 22, pour le retraitement de matières plastiques ou de matériaux à base de matières plastiques renfermant du polyvinyl butyral pour la fabrication ultérieure de matériaux de protection anti-fissures de verre pour des vitres planes, en tant que matériaux de protection anti-implosion et anti-explosion pour des verres de laboratoire, pour des tôles composites ou des revêtements polymères insonorisants pour des plaques de verre et moules poreux frittés.
